# EUROPÄISCHE PATENTSCHRIFT

(11) **EP 1 732 790 B1**
(45) Veröffentlichungstag und Bekanntmachung des Hinweises auf die Patenterteilung: **21.04.2010**
(21) Anmeldenummer: 05716688.6
(22) Anmeldetag: 14.02.2005
(51) Int. Cl.: B60S 1/08

(54) **SCHEIBENWISCHVORRICHTUNG, INSBESONDERE FÜR EIN KRAFTFAHRZEUG**
WINDSCREEN WIPER DEVICE PARTICULARLY FOR A MOTOR VEHICLE
DISPOSITIF ESSUIE-GLACE, EN PARTICULIER POUR UN VEHICULE AUTOMOBILE

(30) Priorität: 26.03.2004 DE 102004015426
(43) Veröffentlichungstag der Anmeldung: 20.12.2006
(73) Patentinhaber: ROBERT BOSCH GMBH, 70442 Stuttgart (DE)
(72) Erfinder: STUBNER, Armin, 77815 Buehl-Altschweier (DE)
(86) Internationale Anmeldenummer: PCT/EP2005/050638
(87) Internationale Veröffentlichungsnummer: WO 2005/092679

(56) Entgegenhaltungen:
- EP-A- 1 176 066
- DE-A1- 10 157 386
- US-A- 4 542 324
- US-A- 5 291 109
- US-A- 5 630 009

## Beschreibung

### Stand der Technik

Die Erfindung betrifft eine Scheibenwischvorrichtung, insbesondere für ein Kraftfahrzeug, nach Gattung der unabhängigen Ansprüche.

Es sind schon zahlreiche Scheibenwischvorrichtungen bekannt, die einen elektromotorischen Antrieb aufweisen, der in einer ersten Geschwindigkeit und in einer zweiten Geschwindigkeit antreibbar ist. Die erste und die zweite Geschwindigkeit des Antriebs korrelieren unmittelbar mit der Geschwindigkeit, mit der die Wischblätter über die Scheibe des Kraftfahrzeugs gleiten. Hierzu weisen die üblichen Scheibenwischvorrichtung zumindest zwei Stufen, insbesondere eine Stufe I und eine Stufe II auf, die den unterschiedlichen Geschwindigkeiten der Wischblätter auf der Scheibe entsprechen. Bei Niederschlag wird vom Fahrzeugführer oder von einer Regensensorsteuereinrichtung die Scheibenwischvorrichtung entsprechend der Stärke des Niederschlags in Stufe I oder - bspw. bei starkem Regen - Stufe II geschaltet.

Ist die Scheibenwischvorrichtung in Stufe II geschaltet, d. h. pendeln die Wischblätter sehr schnell über die Scheiben, so können diese bei nachlassendem Niederschlag trocken laufen, also über eine relativ trockene Scheibe wischen. Da das Wischblatt hierbei nicht mehr auf einem Wasserfilm gleitet, wird die Reibung zwischen Scheibe und Wischblatt stark erhöht und der Antrieb dadurch stark belastet. Dies führt zu einer Überhitzung des Antriebs und unter Umständen zum Totalausfall der Scheibenwischvorrichtung.

Die DE 101 57 386 A1 beschreibt einen Scheibenwischerantrieb mit einem Wischerkörper und einem diesen antreibenden Elektromotor. Dabei ist ein Thermorelais vorgesehen, das eine Temperatur überwacht und bei Überschreiten einer festgelegten Grenztemperatur einen Stromfluss durch den Elektromotor unterbricht, um den Elektromotor vor Überhitzung zu schützen.

Die US 4,542,324 beschreibt eine Steuerschaltung für einen als Drehstrom-Asynchron-Maschine ausgebildeten Elektromotor. Mittels eines Frequenzumrichters wird aus einem Versorgungsdrehstrom ein Antriebsdrehstrom erzeugt, dessen Frequenz durch eine Steuergleichspannung vorgegeben ist und die Geschwindigkeit des Motors bestimmt. Eine Temperaturkontrollschaltung überwacht eine Temperatur und reduziert die Steuergleichspannung, wenn die Gefahr einer Überhitzung droht.

### Vorteile der Erfindung

Die erfindungsgemäße Scheibenwischvorrichtung mit den Merkmalen des Hauptanspruchs hat den Vorteil, dass ein Temperaturerfassungsmittel, zum Erfassen der Betriebstemperatur des Antriebs, sowie ein Schaltmittel vorgesehen sind, das beim Betreiben des Antriebs in der zweiten Geschwindigkeit bei Überschreiten einer vorbestimmten Betriebstemperatur, den Antrieb von der zweiten Geschwindigkeit in die erste Geschwindigkeit schaltet. Auf diese Weise wird ein Überhitzen des Antriebsverhindert und die Scheibenwischvorrichtung so vor einem Totalausfall bewahrt. Dies stellt darüberhinaus eine wesentliche Erhöhung der Sicherheit für den Fahrer dar, da beim Totalausfall der Scheibenwischvorrichtung die Sicht für den Fahrer erheblich reduziert würde.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn die zweite Geschwindigkeit höher ist als die erste Geschwindigkeit, da auf diese Weise ein zuverlässiges Abkühlen des Antriebs ermöglicht wird. Dies gilt insbesondere dann, wenn bei einer niedrigeren Geschwindigkeit die Stromaufnahme des Antriebs geringer ist, wodurch weniger Energie in Wärme umgewandelt wird.

Weiterhin ist es als vorteilhaft anzusehen, wenn das Schaltmittel den zweiten Anschluss zu unterbrechen vermag, da dies einfach und kostengünstig realisierbar ist.

Ist zwischen dem ersten Anschluss und dem zweiten Anschluss eine Diode, insbesondere eine Leistungsdiode geschaltet, so wird beim Unterbrechen des zweiten Anschlusses automatisch der erste Anschluss bestromt.

Besonders vorteilhaft ist es, wenn ein weiteres Schaltmittel vorgesehen ist, das den Antrieb bei Überschreiten einer weiteren vorbestimmten Betriebstemperatur abschaltet, um den Antrieb vor einer weiteren Überhitzung, insbesondere einer Selbstzerstörung schützt.

Am einfachsten und kostengünstigsten kann dies dadurch realisiert werden, dass das weitere Schaltmittel mit dem Masseanschluss verbunden ist.

Zur Vermeidung von elektromagnetischen Störeinflüssen ist es vorteilhaft, zwischen Schaltmittel und ersten/ oder zweiten Anschluss Filterelemente zu schalten.

Besonders vorteilhaft ist es, wenn das Temperaturerfassungsmittel und das Schaltmittel einteilig als Thermoschalter ausgebildet sind. Derartige Thermoschalter sind im Handel als einteilige Bauelemente erhältlich und damit kostengünstig und in großen Stückzahlen verfügbar.

### Zeichnungen

Ein Ausführungsbeispiel der Erfindung ist den Zeichnungen dargestellt und in der nachfolgenden Beschreibung näher erläutert. Es zeigen:
Figur 1, eine erfindungsgemäße Scheibenwischvorrichtung in einer schematischen Darstellung und
Figur 2, eine Schaltungsanordnung für einen Antrieb einer erfindungsgemäßen Scheibenwischvorrichtung.

### Beschreibung des Ausführungsbeispiels

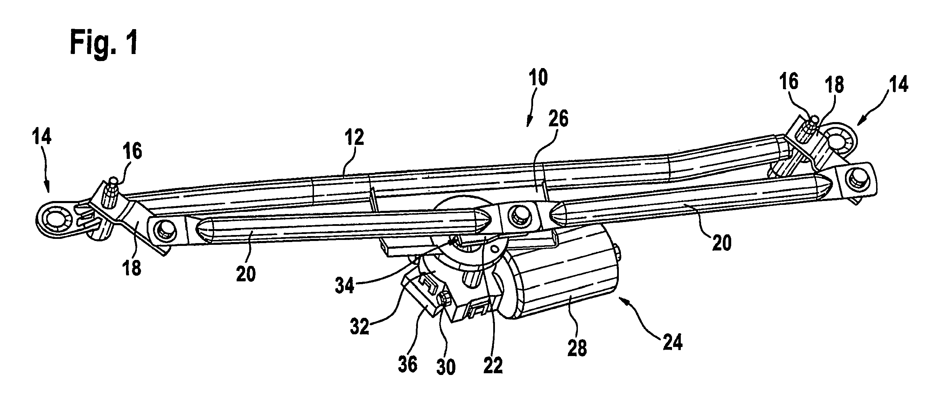

In Figur 1 ist eine erfindungsgemäße Scheibenwischvoirichtung 10 in einer perspektivischen Darstellung gezeigt. Diese umfasst im Wesentlichen ein Trägerrohr 12, das von länglicher Gestalt ist und an dessen Enden jeweils ein Wischerlager 14 befestigt ist. In diesen Wischerlagern 14 ist jeweils eine Wischerwelle 16 gelagert, die drehfest mit Wischerarmen verbunden sind, die an ihren freien Enden jeweils ein Wischblatt tragen. Wischerarm und Wischblatt sind hier der Übersichtlichkeit wegen nicht gezeichnet. Angetrieben werden die Wischerwellen 16 von einer Antriebskurbel 18, die drehfest mit der Wischerwelle 16 verbunden ist. Am freien Ende der Antriebskurbel 18 ist eine Schubstange 20 angelenkt, die an ihrem, der Antriebskurbel 18 abgewandten Ende, mit einer Abtriebskurbel 22 verbunden ist. Die Abtriebskurbel 22 wird durch einen Antrieb 24, der als Elektromotor ausgebildet ist, in eine umlaufende Bewegung versetzt.

Durch die umlaufende Bewegung der Abtriebskurbel 22 wird die Schubstange 20 in ein Hin- und Herbewegung versetzt, so dass die Antriebskurbel 18 eine pendelnde Bewegung vollführt. Dadurch führt die Wischerwelle 16 eine rotatorische Hin- und Herbewegung aus, so dass die Wischerarme und Wischblätter eine pendelnde Bewegung über bzw. auf der Scheibe des Kraftfahrzeugs vollführen.

Der Antrieb 24 ist durch einen Motorträger 26 am Trägerrohr 12 der Scheibenwischvorrichtung 10 befestigt. Der Antrieb 24 weist im Wesentlichen ein Gehäuse 28 auf, aus dem eine Ankerwelle 30 herausragt. Der aus dem Gehäuse 28 herausragende Abschnitt der Ankerwelle 30 trägt eine Schnecke, die sich mit einem Schneckenrad kämmt, das in einem Getriebegehäuse 32 angeordnet ist. Das Schneckenrad ist drehfest mit einer Abtriebswelle 34 verbunden, die wiederum drehfest mit der Abtriebskurbel 22 verbunden ist, so dass diese im Betrieb eine umlaufende Bewegung vollführt. Am Getriebegehäuse 32 ist ein Steuergehäuse 36 angeordnet, in dem Filterelemente 38 sowie mindestens ein Thermoschalter als kombiniertes Temperaturerfassungsmittel 40 und Schaltmittel 50, sowie eine Diode 42 angeordnet sind.

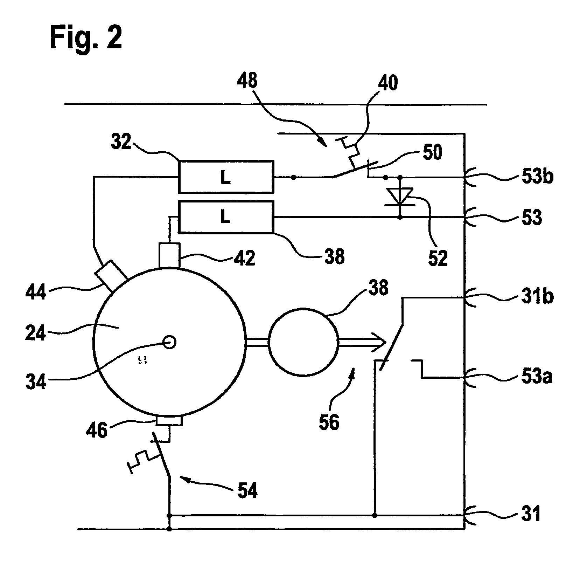

In Figur 2 ist eine schematische Darstellung der Schaltungsanordnung im Steuergehäuse 36 gezeigt. Der Antrieb 24 weist hierbei einen ersten Anschluss 42, einen zweiten Anschluss 44 sowie einen Masseanschluss 46 auf. Der Antrieb 24 ist hierbei derart ausgebildet, dass bei Bestromung des ersten Anschlusses 42 die Antriebswelle 34 mit einer ersten Geschwindigkeit v1 bewegt wird. Analog dazu wird die Abtriebswelle 34 mit einer zweiten Geschwindigkeit v2 bewegt, wenn der zweite Anschluss 44 bestromt wird. Hierzu ist der erste Anschluss 42 über ein Filterelement 38, das elektromagnetische Störungen beseitigt, mit der Klemme 53 des Fahrzeugkabelbaums verbunden. Die Klemme 53 des Fahrzeugkabelbaums wird bestromt, wenn die Scheibenwischvorrichtung in Stufe I Betrieb geschaltet wird. Analog dazu ist der zweite Anschluss 44 ebenfalls über eines der Filterelemente 38 zur Ausfilterung von elektromagnetischen Störungen, mit der Klemme 53b des Fahrzeugkabelbaums verbunden, die dann bestromt wird, wenn die Wischvorrichtung des Kraftfahrzeugs in Stufe II geschaltet wird. Zwischen der Klemme 53b des Fahrzeugkabelbaums und dem Filterelement 38, das mit dem zweiten Anschluss 44 des Antriebs 24 verbunden ist, ist ein Thermoschalter 48 geschaltet. Dieser umfasst ein Temperaturerfassungsmittel 40 und ein Schaltmittel 50. Das Schaltmittel 50 unterbricht die Bestromung des zweiten Anschluss 44, sobald die Temperatur des Antriebs eine vorbestimmte Betriebstemperatur T1 überschreitet. Dies wird durch das Temperaturerfassungsmittel 40 detektiert. Damit wird die Bestromung des zweiten Anschlusses 44 unterbrochen. Zwischen der Klemme 53b, und dem Thermoschalter 48 bzw. dem Schaltmittel 50 ist eine Diode 52 geschaltet, die die Klemme 53b in Durchlassrichtung mit der Klemme 53 verbindet. Wird die Bestromung des zweiten Anschlusses 44 durch Öffnen des Schaltmittels 50 unterbrochen, so wird der erste Anschluss 42 über die Diode 52 und die Klemme 53b bestromt, wodurch die Abtriebswelle 34 von der zweiten Geschwindigkeit v2 in die erste Geschwindigkeit v1 geschaltet wird. Durch die niedrigere Geschwindigkeit der Abtriebswelle 34 wird die Leistung des Antriebs 24 und damit die Erwärmung des selben vermindert. Dadurch kühlt sich der Antrieb 24 im Regelfall ab, bis die Schalttemperatur des Thermoschalters 48 unterschritten wird und das Schaltmittel 50 des Thermoschalters 48 wieder geschlossen wird. Also Folge daraus, wird der zweite Anschluss 44 wieder bestromt, so dass die Abtriebswelle 34 wieder mit der zweiten Geschwindigkeit v2 bewegt wird. Durch die Bestromung des zweiten Anschlusses 44 wird auf dem ersten Anschluss 42 eine Generatorspannung induziert, die ein Abfließen des Stromes aus der Klemme 53b in Richtung des ersten Anschlusses 42 verhindert.

Der Thermoschalter 48 weist hierbei ein Hystereseverhalten auf, d. h. dass die vorbestimmte Betriebstemperatur T1, bei deren Überschreiten das Schaltelement 50 geöffnet wird etwas höher ist, als die Temperatur, bei deren Unterschreiten das Schaltmittel 50 wieder geschlossen wird. Auf diese Weise wird ein ständiges Öffnen und Schließen des Schaltelementes 50 verhindert, da im Bereich der Temperatur T1 ansonsten ein ständiger Wechsel zwischen der ersten und zweiten Geschwindigkeit v1, v2 stattfinden würde, was den Fahrer des Fahrzeugs stören könnte.

Bei sehr hohen Belastungen des Antriebs 24 vermag sich dieser auch nach einer Rückschaltung in Stufe I nicht abzukühlen, sondern erwärmt sich - jedoch verlangsamt - weiter. Um eine Zerstörung des Antriebs 24 - also beispielsweise ein Durchbrennen einer Motorspule - in diesem Fall zu verhindern, weist der Masseanschluss 46 des Antriebs 24 einen weiteren Thermoschalter 54 auf, der mit der Klemme 31 des Fahrzeugkabelbaums verbunden ist. Die Klemme 31 des Fahrzeugkabelbaums entspricht der Massenleitung. Der weitere Thermosschalter 54 unterbricht die Verbindung zwischen dem Masseanschluss 46 und der Klemme 31 - also der Masse - wenn eine weitere vorbestimmte Betriebstemperatur T2 überschritten wird. Diese weitere vorbestimmte Betriebstemperatur T2 ist höher als die erste vorbestimmte Betriebstemperatur T1 und wird also dann überschritten, wenn der Antrieb 24 auch bei Bestromung des ersten Anschlusses 42, d. h. bei Stufe I oder bei Öffnung des Schaltelementes 50 sich weiter erhöht, so dass die weitere vorbestimmte Betriebstemperatur T2 überschritten wird. Durch Öffnen des weiteren Thermoschalters 54 wird der Antrieb 24 gänzlich still gelegt bis dieser wieder abgekühlt ist. Die genaue Höhe der vorbestimmten Betriebstemperatur T1 beträgt etwa zwischen 100 °C und 150 °C und ist davon abhängig, an welcher Stelle des Antriebs 24 der Thermoschalter 48 bzw. das Temperaturerfassungsmittel 40 des Thermoschalters 48 angeordnet ist. Mutatis Mutantis gilt dies auch für den weiteren Thermoschalter 54. Dieser weist eine entsprechend höhere weitere vorbestimmte Betriebstemperatur T2 auf, die beispielsweise zwischen 130 und 180 °C liegt. Bemerkenswert ist hierbei, dass die gezeigte Schaltungsanordnung keinerlei Software oder Mikroprozessor gesteuerte Elemente benötigt.

Zusätzlich weist die Scheibenwischvorrichtung noch einen Parkstellungsschalter 56 auf, der über eine Kontaktscheibenbahn als Drehwinkelschaltelement 58 weitere Bewegungsabläufe der Scheibenwischvorrichtung 10 zu steuern vermag.

In einer Variation der Erfindung kann beim Betrieb in Stufe II, also bei höherer Geschwindigkeit v2 auch ein separates Kühlelement, beispielsweise ein Ventilator oder ein Peltier-Element, betrieben werden. Dann kann es beispielsweise vorteilhaft sein, bei einer Überhitzung in der Stufe I, also bei niedrigerer Geschwindigkeit v1 in die höhere Geschwindigkeit v2, also in Stufe II zu schalten, wenn die Temperatur T1 überschritten wird, da der Antrieb 24 in dieser Stufe besser gekühlt wird. Erfindungsgemäß wird bei Überschreiten der Temperatur T1 der Antrieb 24 immer in die Stufe geschaltet, in der sich dieser besser abkühlt, so dass ein Schaden am Antrieb 24 verhindert wird.

## Patentansprüche

1. Scheibenwischvorrichtung (10), insbesondere für ein Kraftfahrzeug, mit mindestens einem, insbesondere elektromotorischen Antrieb (24), der zumindest in einer ersten Geschwindigkeit (v1) und einer zweiten Geschwindigkeit (v2) antreibbar ist, wobei der Antrieb (24) zumindest drei Anschlüsse (42, 44, 46), insbesondere einen ersten Anschluss (42) für die erste Geschwindigkeit (v1), einen zweiten Anschluss (44) für die zweite Geschwindigkeit (v2) sowie einen Masseanschluss (46), aufweist, **dadurch gekennzeichnet, dass** ein Temperaturerfassungsmittel (40) zum Erfassen der Betriebstemperatur des Antriebs (24), sowie mindestens ein Schaltmittel (50) vorgesehen sind, das beim Betreiben des Antriebs (24) in der zweiten Geschwindigkeit (v2), bei Überschreiten einer vorbestimmten Betriebstemperatur (T1), den Antrieb (24) von der zweiten Geschwindigkeit (v2) in die erste Geschwindigkeit (v1) schaltet, wobei die erste und die zweite Geschwindigkeit (v1, v2) vom Stillstand verschieden sind.

2. Scheibenwischvorrichtung (10) nach einem der vorhergehenden Ansprüche, **dadurch gekennzeichnet, dass** die zweite Geschwindigkeit (v2) höher ist, als die erste Geschwindigkeit (v1).

3. Scheibenwischvorrichtung (10) nach Anspruch 4, **dadurch gekennzeichnet, dass** das Schaltmittel (50) den zweiten Anschluss (44) zu unterbrechen vermag.

4. Scheibenwischvorrichtung (10) nach einem der Ansprüche 4 und 5, **dadurch gekennzeichnet, dass** zwischen dem ersten Anschluss (42) und dem zweiten Anschluss (44) eine Diode, insbesondere eine Leistungsdiode, geschaltet ist.

5. Scheibenwischvorrichtung (10) nach einem der vorhergehenden Ansprüche, **dadurch gekennzeichnet, dass** ein weiteres Schaltmittel (54) vorgesehen ist, das den Antrieb (24) bei Überschreiten einer weiteren vorbestimmten Betriebstemperatur (T2) abschaltet.

6. Scheibenwischvorrichtung (10) nach Anspruch 7, **dadurch gekennzeichnet, dass** das weitere Schaltmittel (54) mit dem Masseanschluss (46) verbunden ist.

7. Scheibenwischvorrichtung (10) nach einem der Ansprüche 4 bis 8, **dadurch gekennzeichnet, dass** zwischen Schaltmittel (50) und ersten und/oder zweiten Anschluss (42, 44) Filterelemente geschaltet sind.

8. Scheibenwischvorrichtung (10) nach einem der vorhergehenden Ansprüche, **dadurch gekennzeichnet, dass** Temperaturerfassungsmittel (40) und Schaltmittel (50) einstückig als Thermoschalter (48) ausgebildet sind.

## Claims

1. Windscreen wiping apparatus (10), in particular for a motor vehicle, having at least one, in particular electromotive, drive (24) which can be driven at least at a first speed (v1) and a second speed (v2), with the drive (24) having at least three connections (42, 44, 46), in particular a first connection (42) for the first speed (v1), a second connection (44) for the second speed (v2) and an earth connection (46), **characterized in that** a temperature detection means (40) for detecting the operating temperature of the drive (24), and also at least one switching means (50) are provided, the said switching means switching the drive (24) from the second speed (v2) to the first speed (v1) when the drive (24) is being operated at the second speed (v2) and a predetermined operating temperature (T1) is exceeded, with the first and the second speed (v1, v2) differing from a stationary state.

2. Windscreen wiping apparatus (10) according to Claim 1, **characterized in that** the second speed (v2) is higher than the first speed (v1).

3. Windscreen wiping apparatus (10) according to Claim 2, **characterized in that** the switching means (50) may interrupt the second connection (44).

4. Windscreen wiping apparatus (10) according to either of Claims 2 and 3, **characterized in that** a diode, in particular a power diode, is connected between the first connection (42) and the second connection (44).

5. Windscreen wiping apparatus (10) according to one of the preceding claims, **characterized in that** a further switching means (54) is provided, the said switching means switching off the drive (24) if a further predetermined operating temperature (T2) is exceeded.

6. Windscreen wiping apparatus (10) according to Claim 5, **characterized in that** the further switching means (54) is connected to the earth connection (46).

7. Windscreen wiping apparatus (10) according to one of Claims 2 to 6, **characterized in that** filter elements are connected between the switching means (50) and the first and/or the second connection (42, 44).

8. Windscreen wiping apparatus (10) according to one of the preceding claims, **characterized in that** the temperature detection means (40) and the switching means (50) are integrally formed as a thermal switch (48).

## Revendications

1. Dispositif d'essuie-glace (10), en particulier pour un véhicule automobile, qui présente au moins un entraînement (24), en particulier par moteur électrique, qui peut être entraîné au moins à une première vitesse (v1) et à une deuxième vitesse (v2), l'entraînement (24) présentant au moins trois bornes de raccordement (42, 44, 46), au moins une première borne de raccordement (42) pour la première vitesse (v1), une deuxième borne de raccordement (44) pour la deuxième vitesse (v2) et une borne (46) de raccordement à la masse,
**caractérisé en ce que**
il présente un moyen (40) de détection de température qui détecte la température de fonctionnement de l'entraînement (24) ainsi qu'au moins un moyen de commutation (50) qui, lorsque l'entraînement (24) fonctionne à la deuxième vitesse (v2) et lorsqu'une température de fonctionnement prédéterminée (T1) est dépassée, commute l'entraînement (24) de la deuxième vitesse (v2) à la première vitesse (v1), la première et la deuxième vitesse (v1, v2) étant différentes de l'arrêt.

2. Dispositif d'essuie-glace (10) selon la revendication 1, **caractérisé en ce que** la deuxième vitesse (v2) est supérieure à la première vitesse (v1).

3. Dispositif d'essuie-glace (10) selon la revendication 2, **caractérisé en ce que** le moyen de commutation (50) peut débrancher la deuxième borne de raccordement (44).

4. Dispositif d'essuie-glace (10) selon l'une des revendications 2 et 3, **caractérisé en ce qu'**une diode et en particulier une diode de puissance est raccordée entre la première borne de raccordement (42) et la deuxième borne de raccordement (44).

5. Dispositif d'essuie-glace (10) selon l'une des revendications précédentes, **caractérisé en ce qu'**il présente un autre moyen de commutation (54) qui débranche l'entraînement (24) lorsqu'une autre température de fonctionnement prédéterminée (T2) est dépassée.

6. Dispositif d'essuie-glace (10) selon la revendication 5, **caractérisé en ce que** l'autre moyen de commutation (54) est relié à la borne (46) de raccordement à la masse.

7. Dispositif d'essuie-glace (10) selon l'une des revendications 2 à 6, **caractérisé en ce que** des éléments de filtrage sont raccordés entre le moyen de commutation (50) et la première et/ou la deuxième borne de raccordement (42, 44).

8. Dispositif d'essuie-glace (10) selon l'une des revendications précédentes, **caractérisé en ce que** le moyen de détection de température (40) et le moyen de commutation (50) sont configurés d'un seul tenant sous la forme d'un thermo-commutateur (48).
